# FASCICULE DE BREVET EUROPEEN

(11) **EP 1 270 421 B1**
(45) Date de publication et mention de la délivrance du brevet: **29.12.2004**
(21) Numéro de dépôt: 02370028.9
(22) Date de dépôt: 19.06.2002
(51) Int. Cl.: B65B 19/34, B65G 47/24

(54) **Procédé et installation de distribution continue et de rangement aligné de produits filiformes**
Verfahren und Vorrichtung zur kontinuierlichen Verteilung sowie zum ausgerichtetem Speichern von länglichen Produkten
Method and device for continuous distribution and aligned storage of elongated products

(30) Priorité: 21.06.2001 FR 0108198; 19.06.2002 FR 0207570
(43) Date de publication de la demande: 02.01.2003
(73) Titulaire: Bonduelle Société Anonyme, 59173 Renescure (FR)
(72) Inventeur: Bollengier, Jacques, La Woestyne, 59173 Renescure (FR); Baranowiski, Eric, La Woestyne, 59173 Renescure (FR); Maureaux, Alain, La Woestyne, 59173 Renescure (FR); Bracquart, Jacques, La Woestyne, 59173 Renescure (FR)
(74) Mandataire: Duthoit, Michel

(56) Documents cités:
- EP-A- 0 688 717
- FR-A- 2 763 040
- JP-A- 58 177 815
- US-A- 2 907 158
- US-A- 4 183 192
- US-A- 4 967 540

## Description

La présente invention concerne un procédé et une installation de distribution continue et de rangements alignés de produits filiformes, par exemple alimentaires, tels que notamment des haricots verts.

Bien que plus particulièrement prévue pour de telles applications, l'invention pourra aussi être utilisée avec tout autre type de légumes filiformes, tels que des frites par exemple, et plus largement avec tout autre type de produits filiformes.

Actuellement, il est connu des procédés de rangement de produits alimentaires filiformes permettant de disposer des produits alignés entre eux. Ces procédés fonctionnent, notamment, par accélération et projetage et sont satisfaisants en terme de qualité de rangement.

Toutefois, ils nécessitent des installations relativement encombrantes et de coût élevé. Ces procédés sont ainsi souvent réservés aux produits haut de gamme. On peut également noter qu'ils présentent des aménagements relativement complexes pour éviter les pertes de produit.

On connaît également du document EP 0.688.717 un procédé et un dispositif pour le conditionnement de produits tels que des haricots verts. Selon ce document, les haricots verts sont tout d'abord alignés selon une direction donnée puis transférés dans des godets de volume variable avant d'être pistonnés dans des conditionnements.

Cependant, les moyens pour aligner les haricots verts divulgués par ce document s'engorgent rapidement lorsque le débit de haricots verts augmente. De plus, le dispositif d'alignement est difficile à nettoyer. Enfin, on constate des pertes importantes avec un tel dispositif, obligeant à mettre en place un système de recyclage.

On connaît de même le document FR 2.763.040 relatif à un dispositif d'introduction de quantités données de denrées alimentaires allongées, telles que des haricots verts, dans des récipients. Selon ce document des godets sont alimentés en produits allongés et évoluent sur le chemin supérieur d'un convoyeur. En aval de la zone de déchargement, le convoyeur dispose d'une pluralité de vibrateurs disposés sous son chemin, qui mettent en vibration chacun desdits godets lorsqu'ils se rencontrent.

Néanmoins cette disposition est encombrante, les godets devant parcourir une distance suffisante avant de voir leurs denrées allongées alignées et tassées. Ce dispositif ne permet donc pas d'aligner et de tasser les denrées allongées au niveau de la zone de déchargement.

Le but de l'invention est de proposer un procédé et une installation qui pallient les inconvénients précités, en bénéficiant d'un encombrement et d'un coût de revient réduits tout en présentant une cadence satisfaisante.

Un autre but de la présente invention est de proposer un procédé et une installation de distribution continue et de rangement aligné de produits filiformes, par exemple alimentaires, tels que des légumes, notamment des haricots verts, qui permettent de limiter les pertes de produits, de façon simple.

Un but supplémentaire de la présente invention est de proposer un tel procédé et une telle installation facilement nettoyable et présentant une meilleure hygiène.

D'autres buts et avantages de l'invention apparaîtront au cours de la description qui va suivre, qui n'est donné qu'à titre indicatif et qui n'a pas pour but de la limiter.

L'invention concerne tout d'abord un procédé de distribution continue et de rangement aligné de produits filiformes, par exemple alimentaires, tels que notamment des haricots verts, dans lequel :
- on présente lesdits produits filiformes (1) au niveau d'une zone de chargement (7),
- on fait défiler une pluralité de poches (4), présentant au moins une ouverture de remplissage par le haut (5),
- on laisse lesdits produits filiformes (1) chuter dans lesdites poches (4) à travers leurdite ouverture de remplissage (5), au niveau d'une partie de la trajectoire desdites poches (4), dite zone de chargement (7),
- on vibre ladite pluralité de poches (4),
caractérisé en ce qu' on forme un flux homogène avec lesdits produits filiformes (1) selon une trajectoire descendante (2) pour présenter lesdits produits filiformes (1) au niveau de ladite zone de chargement (7) et en ce que, pour orienter lesdits produits filiformes selon une direction (3) d'alignement, on fait subir un mouvement de va-et-vient à ladite pluralité de poches (4) dirigé sensiblement horizontalement (31) selon ladite direction (3) d'alignement, ledit mouvement de va-et-vient ayant une amplitude sensiblement du même ordre que la longueur desdits produits filiformes (1), ledit mouvement de va-et-vient et lesdites vibrations appliquées aux poches (4) ayant lieu au moins au niveau de ladite zone de chargement (7).

L'invention concerne également une installation de distribution continue et de rangement aligné de produits filiformes, par exemple alimentaires, tels que notamment des haricots verts, comprenant :
- une pluralité de poches (4) présentant au moins une ouverture de remplissage par le haut (5),
- des moyens (18) pour faire défiler ladite pluralité de poches (4) selon une trajectoire donnée passant par une zone, dite de chargement (7), positionnée de façon à autoriser une chute desdits produits filiformes dans lesdites poches (4) à travers leurdite ouverture de remplissage (5),
- des moyens (19) pour faire vibrer (11) lesdites poches (4),
caractérisé en ce que l'installation présente en outre :
- un dispositif permettant de former un flux homogène avec lesdits produits filiformes (1), selon une trajectoire descendante (2),
- des moyens pour faire subir un mouvement de va-et-vient (31) auxdites poches (4) d'une amplitude sensiblement du même ordre que les produits filiformes (1) au moins au niveau de ladite zone de chargement (7), pour orienter lesdits produits filiformes selon une direction (3) dite d'alignement, ledit mouvement de va-et-vient étant dirigé sensiblement horizontalement (31) selon ladite direction d'alignement (3).

L'invention sera mieux comprise à la lecture de la description suivante, accompagnée des figures en annexe parmi lesquelles :
- la figure 1 est une vue en perspective, partiellement en écorché, illustrant un exemple de réalisation d'une installation conforme à l'invention,
- la figure 2 est une vue en perspective d'un autre exemple de réalisation d'une installation conforme à l'invention,

L'invention concerne tout d'abord un procédé de distribution continue et de rangement aligné de produits filiformes, par exemple alimentaires. Une des applications concernera le rangement aligné de légumes, notamment des haricots verts.

Comme illustré par les différentes figures, selon le procédé conforme à l'invention, on forme un flux homogène avec les produits filiformes 1 selon une trajectoire descendante 2.

Selon le procédé conforme à l'invention, on fait également défiler une pluralité de poches 4, présentant au moins une ouverture de remplissage par le haut 5 et on laisse lesdits produits filiformes 1 chuter dans lesdites poches 4 à travers leurdite ouverture de remplissage 5 au niveau d'une partie de la trajectoire 6 desdites poches 4, dite zone de chargement 7.

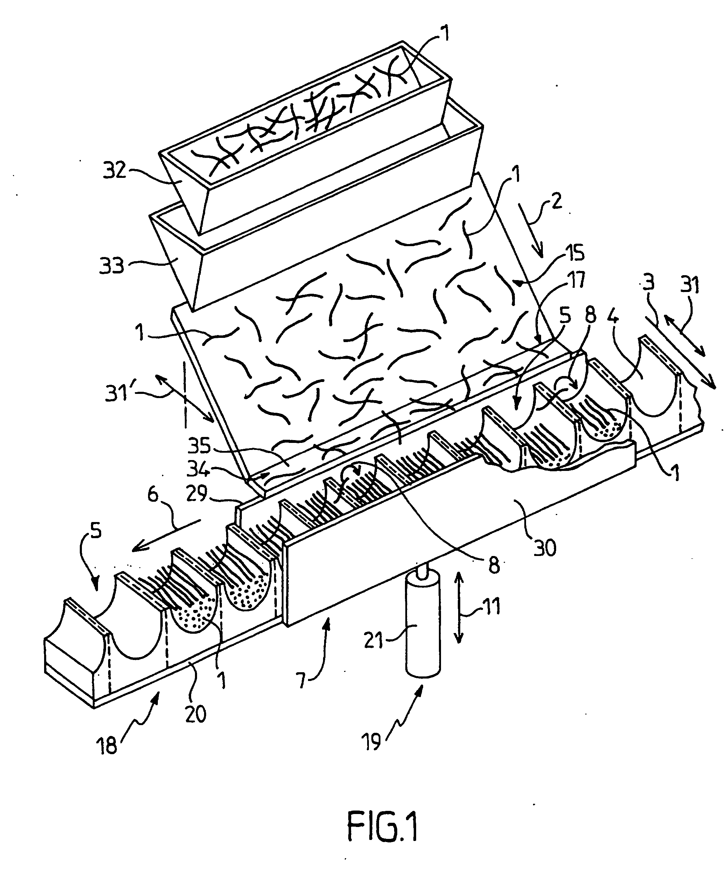

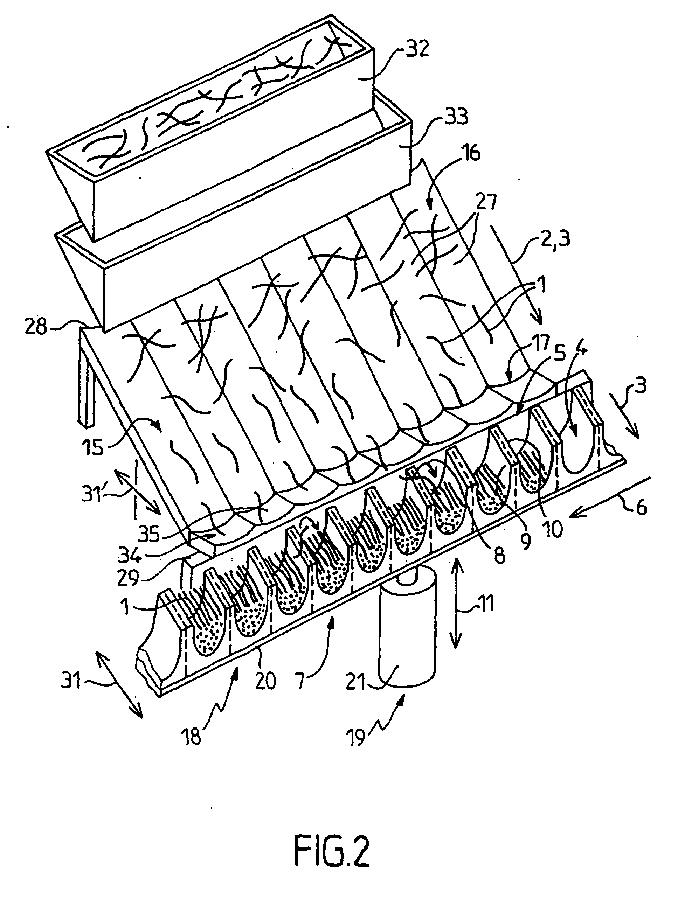

Comme illustré aux figures 1 et 2, on considère que le flux de produits filiformes 1 est homogène car lesdits produits filiformes 1 sont répartis uniformément selon ladite trajectoire descendante 2 et le long de ladite zone de chargement 7. On ne trouve pas d'amas desdits produits filiformes 1 ni de zone où il n'y a pas de produits filiformes.

La répartition des produits filiformes dans lesdites poches 4 permet de former des doses de quantité similaire de produits filiformes 21, et de soumettre lesdits produits filiformes à une action de rangement aligné.

Pour ce faire, conformément à l'invention, on vibre ladite pluralité de poches 4 et on lui fait subir un mouvement de va-et-vient 31, au moins au niveau de ladite zone de chargement 7, pour orienter lesdits produits filiformes 1 selon une direction 3 dite d'alignement.

Cela étant, pour éviter des pertes de produits, il faut s'assurer que les produits filiformes 1 chutant entre deux ouvertures 5 puissent passer dans une poche 4, comme illustré par les flèches repérées 8. Selon l'invention, on vibre ladite pluralité de poches et on lui fait subir un mouvement de va-et-vient 31, au moins au niveau de ladite zone de chargement 7, pour passer un produit filiforme ayant chuté entre deux ouvertures, dans une poche 4.

Dans le cas de haricots verts, les produits filiformes employés auront pu être préalablement éboutés, calibrés et/ou blanchis.

Lesdites poches 4 défilent, notamment en continu, à vitesse constante ou variable, selon un circuit fermé. Elles sont, par exemple, adjacentes. Elles pourront en outre être identiques entre elles.

Pour favoriser le maintien orienté desdits produits filiformes, on pourra encore, éventuellement, conférer au fond desdites poches 4 une section sensiblement hémicylindrique, l'axe longitudinal desdites poches étant situé dans le même plan vertical que ladite direction d'alignement 3. Lesdites poches 4 pourront en outre comprendre, par exemple, deux parois latérales 9, 10 parallèles et présenter ainsi une section en U.

Lesdites parois latérales 9, 10 des poches 4 adjacentes sont maintenues l'une contre l'autre, au moins lors de leur passage dans ladite zone de chargement 7.

Lesdites poches 4 pourront également être ouvertes à leur extrémité longitudinale. Dans un tel cas, on pourra éviter la chute des produits filiformes rangés dans celle-ci grâce à des parois fixes 29, 30 orientées selon la trajectoire 6 desdites poches 4 et les affleurant.

Lesdites parois fixes 29, 30 seront prévues notamment au niveau de la zone de chargement 7 et en toute autre partie du chemin suivi par ladite pluralité de poches 4, dans laquelle ladite pluralité de poches 4 subit un mouvement de va-et-vient 31 et/ou des vibrations.

Lesdites poches défilent par exemple, sensiblement horizontalement, au moins au niveau de ladite zone de chargement 7. Lesdites vibrations 11 sont dirigées sensiblement verticalement, comme illustrées par la flèche repérée 11. Les mouvements de va-et-vient 31 sont dirigés sensiblement horizontalement, selon ladite direction d'alignement 3, comme illustrée par la flèche repérée 31.

Ledit flux de produits filiformes s'étend suivant la direction, repérée 6, perpendiculaire à ladite direction d'alignement 3, par exemple, selon une dimension très supérieure à celle desdites poches 4 suivant la même direction 6 et on fait défiler lesdites poches 4 selon ladite direction 6 sensiblement orthogonale à ladite direction d'alignement 3, au moins lors de leur passage dans ladite zone de chargement 7. On peut ainsi effectuer un remplissage progressif desdites poches 4 pour obtenir une dose sensiblement constante de produits filiformes dans chaque poche, après remplissage.

Conformément à l'invention, le procédé de distribution continue et de rangement aligné de produits filiformes comprend une première étape qui consiste à alimenter en vrac lesdits produits filiformes 1 dans un premier réceptacle 32, pour former une dose non pré-déterminée de produits filiformes.

Ledit premier réceptacle 32 peut par exemple, se présenter sous la forme d'une benne ouvrante, dont le fond par exemple s'ouvre pour laisser tomber ladite dose non-prédéterminée de produits filiformes 1 dans un second réceptacle 33 situé sous ledit premier réceptacle 32.

Lorsque ladite dose non pré-déterminée de produits filiformes 1 est tombée du premier réceptacle 32 dans le second réceptacle 33, ledit premier réceptacle 32 se referme. On pèse alors ladite dose non pré-déterminée dans ledit second réceptacle 33.

Ce système à double étage permet de constituer une dose non pré-déterminée tandis que la dose précédente est pesée.

Une fois la pesée réalisée, on laisse chuter lesdits produits filiformes 1 vers ladite pluralité de poches 4 en les animant d'un mouvement de va-et-vient 31' selon ladite direction d'alignement 3.

On ralentit ensuite lesdits produits filiformes 1 avant leur passage dans lesdites poches 4.

Conformément au procédé selon l'invention, on corrige la vitesse de défilement desdites poches 4, matérialisé par la flèche 6, afin d'adapter ladite vitesse de défilement au résultat de la pesée de ladite dose non-prédéterminée lors de son passage dans ledit second réceptacle.

Ce procédé permet de former un flux homogène de produits filiformes le long de ladite zone de chargement 7.

Il permet également d'assurer un remplissage optimal desdites poches 4, en adaptant la vitesse de défilement desdites poches 4 le long de ladite zone de chargement 7 en fonction de la quantité de produits filiformes 1 qui arrive au niveau de ladite zone de chargement 7.

Lorsque ladite dose non-prédéterminée augmente, la vitesse de défilement augmente également, et réciproquement en cas de diminution de ladite dose non-prédéterminée.

De cette façon, la quantité de produits filiformes dans chacune desdites poches 4, après son passage dans ladite zone de chargement 7, est sensiblement constante.

Avantageusement, connaissant le temps T nécessaire au passage desdits produits filiformes 1, du second réceptacle 33 à la zone de chargement 7, on choisit la vitesse de défilement desdites poches 4 à un instant t en fonction de la quantité de produits filiformes 1 pesée à l'instant t - T.

Il est à noter que ledit temps T peut varier en fonction du calibre du produit filiforme. On peut facilement le déterminer en procédant à des essais

Avantageusement, on alimente, notamment en vrac, lesdits produits filiformes 1 au niveau d'une surface inclinée 15 munie de moyens de ralentissement 34 desdits produits filiformes. En particulier, lesdits moyens de ralentissement 34 sont situés au niveau du bord inférieur 17 de ladite surface inclinée 15.

Selon ce procédé, on fait subir à ladite surface inclinée 15 un mouvement de va-et-vient 31', afin d'homogénéiser ledit flux de produits filiformes le long de ladite surface inclinée 15, avant leur passage dans ladite pluralité de poches 4. Ladite zone de chargement 7 est prévue à l'aplomb desdits moyens de ralentissement 34.

Avantageusement, le mouvement de va-et-vient 31, 31' que l'on fait subir à la dite surface inclinée 15 et à la dite pluralité de poches 4 est synchronisée. Il sera par exemple utile d'utiliser pour ce faire une liaison mécanique, par exemple, entre ladite paroi fixe 29 et ladite surface inclinée 15.

On pourra choisir tout angle d'inclinaison compris entre, par exemple, 30 et 60 °, pour ladite surface inclinée 15. Avantageusement, on choisira un angle de 45 °, vers le haut, par rapport à l'horizontale.

Selon ce procédé, les mouvements de va-et-vient 31, 31' ont une amplitude sensiblement du même ordre que la longueur desdits produits filiformes 1, pour une fréquence de 1 à 5 hertz.

Par exemple, dans le cas de haricots verts, les mouvements de va-et-vient 31, 31' auront une amplitude de 70 à 80 mm.

De plus, lesdites vibrations 11 ont une amplitude inférieure à ladite longueur desdits produits filiformes 1 et notamment sensiblement du même ordre que la dimension de la section desdits produits filiformes 1, pour une fréquence supérieure à 25 hertz.

Par exemple, dans le cas des haricots verts, les vibrations 11 auront une amplitude de 10 à 15 mm.

On rappelle que l'amplitude est la distance prise entre les deux positions extrêmes d'un même point en mouvement alternatif.

On peut remarquer que le temps T mentionné ci-dessus peut également varier en fonction de l'angle d'inclinaison de la surface inclinée 15 ainsi que des caractéristiques (amplitude, fréquence) du mouvement de va-et-vient 31' qu'elle subit.

Ici encore, une série d'essais classiques permet de déterminer facilement ce temps T.

Selon un autre mode de réalisation, plus particulièrement illustré à la figure 2, on pourra également former ledit flux homogène de produits filiformes 1 et les pré-orienter, avant leur transfert dans ladite pluralité de poches 4, de la façon suivante.

On alimente, notamment en vrac, lesdits produits filiformes 1 au niveau d'une surface inclinée 15, munie de moyens 16 de canalisation desdits produits filiformes 1 selon ladite direction d'alignement 3, lesdits moyens de canalisation 16 débouchant au niveau de moyens de ralentissement 34 desdits produits filiformes 1. On fait subir à ladite surface inclinée 15 un mouvement de va-et-vient 31' similaire à celui précédemment décrit.

Il est à noter qu'un tel procédé de distribution continue et de rangement aligné de produits filiformes selon une direction donnée et le dispositif correspondant décrit plus loin, pourront être utilisés tels quels, quels que soient les dispositifs prévus en aval pour la réception des produits filiformes orientés et en amont pour l'alimentation en produits filiformes.

Cela étant, l'invention concerne également une installation de distribution continue et de rangement aligné de produits filiformes, par exemple alimentaires, tels que notamment des haricots verts.

Ladite installation sera notamment destinée à la mise en oeuvre du procédé décrit plus haut.

Elle comprend tout d'abord un dispositif 15 permettant de former un flux homogène avec les produits filiformes 1, selon une trajectoire descendante 2.

Ladite installation comprend également une pluralité de poches 4 présentant au moins une ouverture de remplissage par le haut 5 et des moyens 18 pour faire défiler ladite pluralité de poches 4 selon une trajectoire donnée 6 passant par une zone, dite de chargement, repérée 7, positionnée de façon à autoriser une chute desdits produits filiformes 1, dans lesdites poches 4 à travers leurdite ouverture de remplissage 5.

Afin d'assurer le passage desdits produits filiformes tombant entre deux ouvertures 5 dans une des poches 4, ladite installation comprend encore des moyens 19 pour faire vibrer lesdites poches 4 et des moyens, non représentés, pour leur faire subir un mouvement de va-et-vient 31, au moins au niveau de ladite zone de chargement 7.

Lesdits moyens 18 pour faire défiler lesdites poches 4 sont constitués, par exemple, d'un convoyeur 20, notamment à bande, auxquelles lesdites poches 4 sont assujetties, et lesdits moyens pour faire vibrer 19 lesdites poches 4 sont constitués, par exemple, d'au moins un vibreur 21, prévu au niveau de ladite zone de chargement 7, pour faire vibrer le ou lesdits convoyeurs 20, notamment verticalement.

Lesdits moyens pour faire subir un mouvement de va-et-vient 31 auxdites poches 4 et pour animer les produits filiformes 1 d'un mouvement de va-et-vient 31 sont constitués, par exemple, d'un dispositif bielle/manivelle permettant d'actionner lesdites poches 4, selon un mouvement d'oscillation suivant ladite direction d'alignement 3, au moins au niveau de ladite zone de chargement 7

Comme illustré à la figure 1, selon un premier mode de réalisation, ledit dispositif permettant de former un flux homogène avec lesdits produits filiformes 1 comprend, par exemple :
- un premier réceptacle 32 pour former une dose, non-prédéterminée, de produits filiformes 1,
- un second réceptacle 33, pour peser ladite dose, non-prédéterminée, pendant que le premier réceptacle 32 se remplit d'une nouvelle dite dose non-prédéterminée,
- une surface inclinée 15, munie de moyens 34 de ralentissement desdits produits filiformes 1, lesdits moyens de ralentissement 34 étant situés au niveau du bord inférieur 17 de ladite surface inclinée 15,
- des moyens, non représentés, pour faire subir un mouvement de va-et-vient 31 à ladite surface inclinée 15.

Selon l'invention, ladite zone de chargement 7 est prévue à l'aplomb du bord des moyens de ralentissement 34.

Lesdits moyens pour faire subir un mouvement de va-et-vient 31 à ladite surface inclinée 15 sont constitués, par exemple, d'un dispositif bielle/manivelle permettant d'actionner ladite surface inclinée 15 selon un mouvement d'oscillation suivant ladite direction d'alignement 3.

Lesdits réceptacles 32, 33 sont constitués de parois latérales fixes et d'un fond amovible. Ils disposent d'une ouverture par le haut.

Selon l'invention, les réceptacles s'ouvrent alternativement.

En fonctionnement, pendant que le premier réceptacle 32 se remplit pour constituer une dose, non-prédéterminée, de produits filiformes 1, des moyens de mesure (non représentés) procèdent à la pesée de la précédente dose non-prédéterminée, déversée dans ledit réceptacle 33. Puis ledit réceptacle 33 s'ouvre, laissant chuter lesdits produits filiformes sur la surface inclinée 15.

Ledit premier réceptacle 32 joue donc le rôle d'une zone tampon, permettant la constitution d'unedite dose non-prédéterminée tandis qu'on procède à la pesée de la précédente dite dose dans ledit second réceptacle 33.

Avantageusement, la durée du cycle ouverture, fermeture, remplissage et/ou pesée, est très réduite. Cela permet notamment de se rapprocher au mieux d'une alimentation continue de la surface inclinée 15, et donc d'améliorer l'homogénéité du flux de produits filiformes 1.

Avantageusement, cette durée est proche de 2 secondes.

Lesdits moyens de ralentissement 34 sont avantageusement constitués d'une bande horizontale 35, sensiblement rectangulaire, de longueur sensiblement égale à celle du bord inférieur 17 de ladite surface inclinée 15 et de largeur inférieure à la longueur desdits produits filiformes 1.

Il est également avantageux de synchroniser le mouvement de va-et-vient 31, 31' de ladite surface inclinée 15 et desdites poches 4. Cela permet notamment que la zone de chargement 7 soit toujours à l'aplomb du bord des moyens de ralentissement 34.

Comme illustrée à la figure 2, selon une variante de réalisation, ladite surface inclinée 15 est munie de moyens 16 de canalisation desdits produits filiformes 1 selon ladite direction d'alignement 3, lesdits moyens de canalisation débouchant au niveau des moyens de ralentissement 34 de la surface inclinée 15.

Lesdits moyens de canalisation 16 sont constitués, par exemple, d'une pluralité de canaux 27, sensiblement parallèles les uns aux autres et orientés selon ladite direction d'alignement 3, lesdits canaux s'étendant jusqu'audit bord inférieur 17 de ladite surface inclinée 15.

Ladite surface inclinée 15 est par exemple définie par la face supérieure d'une plaque au niveau de laquelle sont prévus lesdits canaux. Ladite plaque est, notamment, sensiblement rectangulaire et lesdits canaux 27 s'étendent de son bord supérieur 28 à son bord inférieur 27.

Lesdits canaux 27 pourront être de section incurvée, ce qui facilitera la pré-orientation desdits produits filiformes 1.

La largeur desdits canaux 27 est, par exemple, sensiblement identique à celle desdites poches 4. Il est prévu, notamment, plusieurs dits canaux 27 et la dimension de ladite surface inclinée 15 selon la direction perpendiculaire à ladite direction d'alignement 3 est ainsi très largement supérieure à la largeur desdites poches.

Par exemple, lesdits mouvements de va-et-vient 31, 31' ont une amplitude sensiblement du même ordre que la longueur desdits produits filiformes 1, pour une fréquence de 1 à 5 hertz, et lesdites vibrations 11 ont une amplitude inférieure à ladite longueur desdits produits filiformes, pour une fréquence supérieure à 25 hertz.

Par exemple, dans le cas de haricots verts, lesdits mouvements de va-et-vient 31, 31' pourront avoir une amplitude de 70 à 80 mm et lesdites vibrations 11, une amplitude de 10 à 15mm.

De manière générale, en aval, lesdits produits filiformes 1 rangés alignés pourront être conditionnés en les transférant, de façon connue de l'homme de l'art, desdites poches 4 vers des réceptacles de conditionnement, comme cela est décrit, notamment, dans le brevet français FR-2.750.671 qui décrit un emboîtage de dose préconstituée de produits filiformes rangés alignés dans des poches. Ce document concerne un mode de fonctionnement employant un carroussel. Un emboîtage utilisant les mêmes moyens orientés linéairement pourraient être également prévus.

Naturellement, d'autres modes de réalisation, à la portée de l'homme de l'art, auraient aussi pu être envisagés sans pour autant sortir du cadre de l'invention.

## Revendications

1. Procédé de distribution continue et de rangement aligné de produits filiformes, par exemple alimentaires, tels que notamment des haricots verts, dans lequel :
- on présente lesdits produits filiformes (1) au niveau d'une zone de chargement (7),
- on fait défiler une pluralité de poches (4), présentant au moins une ouverture de remplissage par le haut (5),
- on laisse lesdits produits filiformes (1) chuter dans lesdites poches (4) à travers leurdite ouverture de remplissage (5), au niveau d'une partie de la trajectoire desdites poches (4), dite zone de chargement (7),
- on vibre ladite pluralité de poches (4),
**caractérisé en ce qu'** on forme un flux homogène avec lesdits produits filiformes (1) selon une trajectoire descendante (2) pour présenter lesdits produits filiformes (1) au niveau de ladite zone de chargement (7), et **en ce que**, pour orienter lesdits produits filiformes selon une direction (3) d'alignement, on fait subir un mouvement de va-et-vient à ladite pluralité de poches (4) dirigé sensiblement horizontalement (31) selon ladite direction (3) d'alignement, ledit mouvement de va-et-vient ayant une amplitude sensiblement du même ordre que la longueur desdits produits filiformes (1), ledit mouvement de va-et-vient et lesdites vibrations appliquées aux poches (4) ayant lieu au moins au niveau de ladite zone de chargement (7).

2. Procédé selon la revendication 1, dans lequel lesdites poches (4) défilent sensiblement horizontalement, au moins au niveau de ladite zone de chargement (7), et dans lequel les vibrations appliquées auxdites poches (4) sont dirigées sensiblement verticalement (11).

3. Procédé selon la revendication 1 ou 2, dans lequel ledit flux de produits filiformes s'étendant suivant la direction perpendiculaire (6) à ladite direction d'alignement (3) selon une dimension très supérieure à celle desdites poches (4) suivant la même direction, on fait défiler lesdites poches (4) selon ladite direction sensiblement orthogonale à ladite direction d'alignement (3), au moins lors de leur passage dans ladite zone de chargement (7), pour permettre un remplissage progressif desdites poches (4).

4. Procédé selon l'une quelconque des revendications 1 à 3, dans lequel :
- on alimente lesdits produits filiformes dans un premier réceptacle (32), pour former une dose, non-prédéterminée, de produits filiformes,
- on pèse ladite dose dans un second réceptacle (33) situé sous ledit premier réceptacle (32)
- on laisse chuter lesdits produits filiformes vers lesdites poches (4) en les animant d'un mouvement de va-et-vient (31') selon ladite direction d'alignement (3),
- on ralentit lesdits produits filiformes avant leur passage dans lesdites poches (4),
- on corrige la vitesse de défilement (6) desdites poches (4),
afin d'adapter ladite vitesse au résultat de la pesée de ladite dose, pour former un flux homogène de produits filiformes, le long de ladite zone de chargement (7).

5. Procédé selon l'une quelconque des revendications 1 à 3, dans lequel :
- on alimente lesdits produits filiformes au niveau d'une surface inclinée (15), munie de moyens de ralentissement (34) desdits produits filiformes, lesdits moyens de ralentissement (34) étant situés au niveau d'un ou des bords inférieurs (17) de ladite surface inclinée (15),
- on fait subir un mouvement de va-et-vient (31') à ladite surface inclinée (15),
afin d'homogénéiser ledit flux de produits filiformes le long de ladite surface inclinée avant leur transfert dans ladite pluralité de poches (4), ladite zone de chargement (7) étant prévue à l'aplomb desdits moyens de ralentissement.

6. Procédé selon la revendication 5, dans lequel on fait subir un mouvement de va-et-vient (31') à ladite surface inclinée (15) et de va-et-vient (31) à ladite pluralité de poches (4) de façon synchronisée.

7. Procédé selon l'une quelconque des revendications précédentes, dans lequel lesdits mouvements (31, 31') de va-et-vient ont une amplitude sensiblement du même ordre que la longueur desdits produits filiformes (1) pour une fréquence de 1 à 5 hertz, et dans lequel lesdites vibrations (11) ont une amplitude inférieure à ladite longueur desdits produits filiformes (1) pour une fréquence supérieure à 25 hertz.

8. Installation de distribution continue et de rangement aligné de produits filiformes, par exemple alimentaires, tels que notamment des haricots verts, comprenant :
- une pluralité de poches (4) présentant au moins une ouverture de remplissage par le haut (5),
- des moyens (18) pour faire défiler ladite pluralité de poches (4) selon une trajectoire donnée passant par une zone, dite de chargement (7), positionnée de façon à autoriser une chute desdits produits filiformes dans lesdites poches (4) à travers leur dite ouverture de remplissage (5),
- des moyens (19) pour faire vibrer (11) lesdites poches (4),
**caractérisé en ce que** l'installation présente en outre :
- un dispositif permettant de former un flux homogène avec lesdits produits filiformes (1), selon une trajectoire descendante (2),
- des moyens pour faire subir un mouvement de va-et-vient (31) auxdites poches (4) d'une amplitude sensiblement du même ordre que les produits filiformes (1) au moins au niveau de ladite zone de chargement (7), pour orienter lesdits produits filiformes selon une direction (3) dite d'alignement, ledit mouvement de va-et-vient étant dirigé sensiblement horizontalement (31) selon ladite direction d'alignement (3).

9. Installation selon la revendication 8, dans laquelle lesdits moyens (18) pour faire défiler lesdites poches (4) sont constitués d'au moins un convoyeur (20), auquel lesdites poches (4) sont assujetties, dans laquelle lesdits moyens (19) pour faire vibrer lesdites poches (4) sont constitués d'au moins un vibreur (21), prévu au niveau de ladite zone de chargement (7) pour faire vibrer le ou lesdits convoyeurs (20) et dans laquelle lesdits moyens pour faire subir un mouvement de va-et-vient (31) auxdites poches (4) sont constitués d'au moins un balanceur, prévu au niveau de ladite zone de chargement (7), pour faire subir un mouvement de va-et-vient (31) audit ou auxdits convoyeurs (20).

10. Installation selon la revendication 8 ou 9, dans laquelle ledit dispositif permettant de former un flux homogène avec lesdits produtis filiformes comprend :
- un premier réceptacle pour former une dose, non prédéterminée, de produits filiformes,
- un second réceptacle pour peser ladite dose, pendant que le premier réceptacle se remplit d'une nouvelle dite dose, non-prédéterminée,
- une surface inclinée (15), munie de moyens (34) de ralentissement desdits produits filiformes, lesdits moyens de ralentissement (34) étant situés au niveau d'un ou de bords inférieurs (17) de ladite surface inclinée (15),
- des moyens pour faire subir un mouvement de va-et-vient (31') à ladite surface inclinée (15),
- ladite zone de chargement (7) étant prévue à l'aplomb du ou des bords desdits moyens de ralentissement (34).

11. Installation selon la revendication 10, dans laquelle lesdits moyens de ralentissement (34) sont constitués d'une bande horizontale (35) sensiblement rectangulaire, de longueur sensiblement égale à celle du bord inférieur (17) de ladite surface inclinée (15) et de largeur inférieure à la longueur desdits produits filiformes (1).

12. Installation selon l'une quelconque des revendications 9 ou 10, dans laquelle le mouvement de va-et-vient (31') de ladite surface inclinée (15) et celui (31) desdites poches (4) est synchrone.

13. Installation selon l'une quelconque des revendications 8 à 12, dans laquelle lesdits mouvements de va-et-vient (31, 31') ont une amplitude sensiblement du même ordre que la longueur desdits produits filiformes (1) pour une fréquence de 1 à 5 hertz et dans laquelle lesdites vibrations (11) ont une amplitude inférieure à ladite longueur desdits produits filiformes (1) pour une fréquence supérieure à 25 hertz.

## Patentansprüche

1. Verfahren zur kontinuierlichen Verteilung und zum ausgerichteten Ordnen von hülsenförmigen Produkten, zum Beispiel von Nahrungsmitteln wie insbesondere grüner Bohnen, bei dem :
- die besagten hülsenförmigen Produkte (1) im Bereich einer Beschickungszone (7) vorgelegt werden,
- eine Mehrheit von Beuteln (4), aufweisend wenigstens eine obere Füllöffnung (5), gelassen werden, sich fortzubewegen,
- die besagten hülsenförmigen Produkte (1) veranlaßt werden, in die besagten Beutel (4) durch ihre genannte Füllöffnung (5) im Bereich eines Teiles der Flugbahn der besagten Beutel (4), der als Beschickungszone (7) bezeichnet wird, zu fallen,
- die besagte Mehrheit von Beuteln (4) geschüttelt wird,
**dadurch gekennzeichnet, daß** aus den besagten hülsenförmigen Produkten (1) ein homogener Fluß nach einer absteigenden Flugbahn (2) gebildet wird, um die besagten hülsenförmigen Produkte (1) im Bereich der besagten Beschickungszone (7) vorzulegen, sowie dadurch, daß, um die besagten hülsenförmigen Produkte nach einer Fluchtrichtung (3) zu richten, die besagte Mehrheit von Beuteln (4) einer Hin- und Herbewegung unterzogen wird, die im wesentlichen horizontal (31) nach der besagten Fluchtrichtung (3) gerichtet ist, wobei die besagte Hin- und Herbewegung eine Amplitude habe, die im wesentlichen derselben Größenordnung ist wie die Länge der besagten hülsenförmigen Produkte (1), wobei die besagte Hin- und Herbewegung und die besagten Vibrationen, die an den Beuteln (4) ausgeübt werden, wenigstens im Bereich der besagten Beschickungszone (7) stattfinden.

2. Verfahren nach Anspruch 1, bei dem die besagten Beutel (4) sich im wesentlichen horizontal wenigstens im Bereich der besagten Beschickungszone (7) fortbewegen, und bei dem die an den besagten Beuteln (4) ausgeübten Vibrationen im wesentlichen vertikal (11) gerichtet sind.

3. Verfahren nach Anspruch 1 oder 2, bei dem der besagte Fluß der hülsenförmigen Produkte folgend der Richtung (6) senkrecht zu der besagten Fluchtrichtung (3) sich nach einer Abmessung erstreckt, die viel größer ist als jene der besagten Beutel (4), die derselben Richtung folgen, wobei die besagten Beutel (4) gelassen werden, sich nach der besagten Richtung im wesentlichen rechtwinklig zu der besagten Fluchtrichtung (3) wenigstens bei ihrem Durchgang durch die besagte Beschickungszone (7) fortzubewegen, um ein fortschreitendes Füllen der besagten Beutel (4) zu erlauben.

4. Verfahren nach irgendeinem der Ansprüche 1 bis 3, bei dem:
- die besagten hülsenförmigen Produkte in einen ersten Sammelbehälter (32) zugeführt werden, um eine nicht vorbestimmte Dosis der hülsenförmigen Produkte zu bilden,
- die besagte Dosis in einem zweiten Sammelbehälter (33), der unter dem besagten ersten Sammelbehälter (32) befindlich ist, gewägt wird,
- die besagten hülsenförmigen Produkte gelassen werden, in Richtung der besagten Beutel (4) zu fallen, indem sie durch eine Hin- und Herbewegung (31') nach der besagten Fluchtrichtung (3) getrieben werden,
- die besagten hülsenförmigen Produkte vor ihrem Übergang in die besagten Beutel (4) verlangsamt werden,
- die Ablaufgeschwindigkeit (6) der besagten Beutel (4) korrigiert wird, um die besagte Geschwindigkeit dem Ergebnis vom Wägen der besagten Dosis anzupassen, um aus den hülsenförmigen Produkten einen homogenen Fluß entlang der besagten Beschickungszone (7) zu bilden.

5. Verfahren nach irgendeinem der Ansprüche 1 bis 3, bei dem:
- die besagten hülsenförmigen Produkte im Bereich einer schrägen Oberfläche (15) zugeführt werden, die mit Mitteln zur Verlangsamung (34) der besagten hülsenförmigen Produkte ausgestattet ist, wobei die besagten Verlangsamungsmittel (34) sich im Bereich eines oder der unteren Ränder (17) der besagten schrägen Oberfläche (15) befinden,
- die besagte schräge Oberfläche (15) einer Hin- und Herbewegung (31') unterzogen wird,
um den besagten Fluß hülsenförmiger Produkte entlang der besagten geneigten Oberfläche, vor deren Übertragung in die besagte Mehrheit von Beuteln (4), zu homogenisieren, wobei die besagte Beschickungszone (7) lotrecht zu den besagten Verlangsamungsmitteln vorgesehen sei.

6. Verfahren nach Anspruch 5, bei dem die besagte schräge Oberfläche (15) einer Hin- und Herbewegung (31'), und die besagte Mehrheit von Beuteln (4) einer Hin- und Herbewegung (31) auf synchronisierte Art und Weise unterzogen wird.

7. Verfahren nach irgendeinem der vorgehenden Ansprüche, bei dem die besagten Hin- und Herbewegungen (31, 31') eine Amplitude haben, die im wesentlichen derselben Größenordnung wie die Länge der hülsenförmigen Produkte (1) für eine Frequenz von 1 bis 5 Hertz ist, und bei dem die besagten Vibrationen (11) eine Amplitude haben, die kleiner als die besagte Länge der hülsenförmigen Produkte (1) für eine Frequenz über 25 Hertz ist.

8. Anlage zur kontinuierlichen Verteilung und zum ausgerichteten Ordnen von hülsenförmigen Produkten, zum Beispiel von Nahrungsmitteln wie insbesondere grüner Bohnen, umfassend:
- eine Mehrheit von Beuteln (4), aufweisend wenigstens eine obere Füllöffnung (5),
- Mittel (18), um die besagte Mehrheit von Beuteln (4) sich nach einer bestimmten Flugbahn fortbewegen zu lassen, die durch eine Zone geht, die als Beschickungszone (7) bezeichnet wird, die positioniert ist, derart, um das Fallen der sogenannten hülsenförmigen Produkte in die besagten Beutel (4) durch deren besagte Füllöffnung (5) zu erlauben,
- Mittel (19), um die besagten Beutel (4) vibrieren (11) zu lassen,
**dadurch gekennzeichnet, daß** die Anlage außerdem folgendes aufweist:
- eine Vorrichtung, erlaubend, einen homogenen Fluß mit den besagten hülsenförmigen Produkten (1) nach einer absteigenden Flugbahn (2) zu bilden,
- Mittel, um die besagten Beutel (4) einer Hin- und Herbewegung (31) mit einer Amplitude, die im wesentlichen derselben Größenordnung ist wie die der hülsenförmigen Produkte (1), wenigstens im Bereich der besagten Beschickungszone (7) zu unterziehen, um die besagten hülsenförmigen Produkte nach einer Richtung (3) zu lenken, die als Fluchtrichtung bezeichnet wird, wobei die besagte Hin- und Herbewegung im wesentlichen horizontal (31) nach der besagten Fluchtrichtung (3) gerichtet ist.

9. Anlage nach Anspruch 8, bei der die besagten Mittel (18), um die besagten Beutel (4) sich fortbewegen zu lassen, aus wenigstens einem Beförderer (20) bestehen, an dem die besagten Beutel (4) befestigt sind, bei der die besagten Mittel (19), um die besagten Beutel (4) vibrieren zu lassen, aus wenigstens einem Rüttler (21) gebildet sind, der im Bereich der besagten Beschickungszone (7) vorgesehen ist, um den oder die besagten Beförderer (20) vibrieren zu lassen, und bei der die besagten Mittel, um die besagten Beutel (4) eine Hin- und Herbewegung (31) erfahren zu lassen, aus wenigstens einem Schwengel bestehen, der im Bereich der besagten Beschickungszone (7) vorgesehen ist, um den oder die besagten Beförderer (20) einer Hin- und Herbewegung (31) zu unterziehen.

10. Anlage nach Anspruch 8 oder 9, bei der die besagte Vorrichtung, erlaubend, aus den besagten hülsenförmigen Produkten einen homogenen Fluß zu bilden, folgendes umfasst :
- einen ersten Sammelbehälter, um eine nicht vorbestimmte Dosis hülsenförmiger Produkte zu bilden,
- einen zweiten Sammelbehälter, um die besagte, nicht vorbestimmte Dosis zu wägen, während sich der erste Sammelbehälter mit einer neuen genannten nicht vorbestimmten Dosis nachgefüllt,
- eine schräge Oberfläche (15), die mit Mitteln (34) zur Verlangsamung der besagten hülsenförmigen Produkte ausgestattet ist, wobei die besagten Verlangsamungsmittel (34) sich im Bereich eines oder mehreren unteren Ränder (17) der besagten schrägen Oberfläche (15) befinden,
- Mittel, um die besagte schräge Oberfläche (15) eine Hin- und Herbewegung (31') erfahren zu lassen,
- die besagte Beschickungszone (7), die lotrecht zu dem oder den Rändern der besagten Verlangsamungsmittel (34) vorgesehen sei.

11. Anlage nach Anspruch 10, bei der die besagten Verlangsamungsmittel (34) aus einem im wesentlichen rechteckigen horizontalen Band (35) gebildet sind mit einer Länge, die im wesentlichen jener des unteren Randes (17) der besagten schrägen Oberfläche (15) entspricht, und mit einer Breite, die kleiner ist als die Länge der hülsenförmigen Produkte (1).

12. Anlage nach irgendeinem der Ansprüche 9 oder 10, bei der die Hin- und Herbewegung (31') der besagten schrägen Oberfläche (15) und jene (31) der besagten Beutel (4) synchron ist.

13. Anlage nach irgendeinem der Ansprüche 8 bis 12, bei der die besagten Hinund Herbewegungen (31, 31') eine Amplitude haben, die im wesentlichen derselben Größenordnung ist wie die Länge der hülsenförmigen Produkte (1) für eine Frequenz von 1 bis 5 Hertz, und bei der die besagten Vibrationen (11) eine Amplitude haben, die kleiner ist als die besagte Länge der hülsenförmigen Produkte (1) für eine Frequenz über 25 Hertz.

## Claims

1. A method for continuous distribution and aligned storage of filiform products, for example foodstuffs, such as notably French beans, wherein:
- said filiform products (1) are presented to a loading zone (7),
- a plurality of pockets (4) are run, exhibiting at least one top-filling opening (5),
- said filiform products (1) are dropped into said pockets (4) through said filling opening (5), at a portion of the path of said pockets (4), so-called loading zone (7),
- said plurality of pockets (4) are vibrated,
**characterised in that** a homogeneous flux is formed with said filiform products (1) along a descending path (2) to present said filiform products (1) to said loading zone (7), and **in that**, in order to orient said filiform products along an alignment direction (3), said plurality of pockets (4) directed substantially horizontally (31) are moved back and forth along said alignment direction (3), said back and forth movement having an amplitude substantially of the same order as the length of said filiform products (1), said back and forth movement and said vibrations applied to said pockets (4) taking place at least by said loading zone (7).

2. A method according to claim 1, wherein said pockets (5) run substantially horizontally, at least by said loading zone (7), and wherein said vibrations applied to said pockets (4) are directed substantially vertically (11).

3. A method according to claim 1 or 2, wherein said flux of filiform products extending along the direction (6) perpendicular to said alignment direction (3) along a dimension vastly greater than that of said pockets (4) along the same direction, said pockets (4) are run along the same direction substantially orthogonal to said alignment direction (3), at least when passing through said loading zone (7), to enable gradual filling of said pockets (4).

4. A method according to any of the claims 1 to 3, wherein:
- said filiform products are fed into a first receptacle (32), to form a non-predetermined dose, of filiform products,
- said dose is weighed in a second receptacle (33) situated below said first receptacle (32),
- said filiform products are dropped to said pockets (4) by being moved back and forth (31') along said alignment direction (3),
- said filiform products are slowed down before passing through said pockets (4),
- the running speed (6) of said pockets (4) is corrected in order to suit said speed to the result of the weighing of said dose,
in order to form a homogeneous flux of filiform products, along said loading zone (7).

5. A method according to any of the claims 1 to 3, wherein:
- said filiform products are fed at a tilted surface (15), fitted with slowing down means (34) of said filiform products, said slowing down means (34) being situated at one or several lower edges (17) of said tilted surface (15),
- said tilted surface (15) is moved back and forth (31'),
in order to render said flux of filiform products homogeneous along said tilted surface before being transferred into said plurality of pockets (4), said loading zone (7) being provided vertically to said slowing down means.

6. A method according to claim 5, wherein said tilted surface (15 is moved back and forth (31') and said plurality of pockets (4) are moved back and forth (31) synchronously.

7. A method according to any of the previous claims, wherein said back and forth movements (31, 31') have substantially an amplitude substantially of the same order as the length of said filiform products (1) for a 1-5 Hertz frequency, and wherein said vibrations (11) have an amplitude smaller than said length of said filiform products (1) for a frequency greater than 25 Hertz.

8. An installation of continuous distribution and of alignment storage of filiform products, for example foodstuffs, such as notably French beans, including:
- a plurality of pockets (4) exhibiting at least one top-filling opening (5),
- means (18) for running said plurality of pockets (4) along a given path passing through a so-called loading zone (7), positioned in order to allow said filiform products to drop into said pockets (4) through said filling opening (5),
- means (19) for vibrating (11) said pockets (4),
**characterised in that** the installation also comprises:
- a device enabling to form a homogeneous flux with said filiform products (1), along a descending path (2),
- means for imparting a back and forth movement (31) to said pockets (4) by an amplitude substantially of the same order as the filiform products (1) at least by said loading zone (7), for orienting said filiform products along a so-called alignment direction (3), said back and forth movement being directed substantially horizontally (31) along said alignment direction (3).

9. An installation according to claim 8, wherein said means (18) for running said pockets (4) are formed of at least one conveyor (20), to which said pockets (4) are slaved, wherein means (19) for vibrating said pockets (4) are formed of at least one vibrator (21), provided at said loading zone (7) for vibrating the conveyor(s) (20) and wherein said means for imparting a back and forth movement (31) to said pockets (4) are formed of at least one pendulum, provided at said loading zone (7), for imparting a back and forth movement (31) to said conveyor(s) (20).

10. An installation according to claim 8 or 9, wherein said device enabling to form a homogeneous flux with said filiform products comprises:
- a first receptacle to form a non-predetermined dose of filiform products,
- a second receptacle for weighing said dose, while the first receptacle is filling up with a new so-called non-predetermined dose,
- a tilted surface (15), fitted with means (34) for slowing down said filiform products, said slowing down means (34) being situated at one or several lower edge(s) (17) of said tilted surface (15),
- means for imparting a back and forth movement (31') to said tilted surface (15),
- said loading zone (7) being provided vertically to the edge(s) of said slowing down means (34).

11. An installation according to claim 10, wherein said slowing down means (34) are formed of a substantially rectangular horizontal band (35), of length substantially equal to that of the lower edge (17) of said tilted surface (15) and of width smaller than the length of said filiform products (1).

12. An installation according to any of the claims 9 or 10, wherein the back and forth movement (31') of said tilted surface (15) and that (31) of said pockets (4) is synchronous.

13. An installation according to any of the claims 8 to 12, wherein said back and forth movements (31, 31') have an amplitude substantially of the same order as the length of said filiform products (1) for a 1 to 5 Hertz frequency and wherein said vibrations (11) have an amplitude smaller than said length of said filiform products (1) for a frequency greater than 25 Hertz.
